# EUROPEAN PATENT APPLICATION

(11) **EP 4 483 699 A1**
(43) Date of publication of application: **01.01.2025**
(21) Application number: 24180550.6
(22) Date of filing: 06.06.2024
(51) Int. Cl.: A01D 41/127, A01D 61/00

(54) **SYSTEM AND METHOD FOR DETECTING AND CONTROLLING AUGER GAP VIA IMAGING PROCESSING**

(30) Priority: 09.06.2023 US 202363507161 P
(71) Applicant: CNH Industrial America LLC, New Holland, PA 17557 (US)
(72) Inventor: Martin, Jethro, New Holland, 17557 (US); Hunt, Cory, New Holland, 17557 (US)
(74) Representative: CNH Industrial IP Department

(57) **Abstract**

The present invention relates to an agricultural harvester (100) with an auger gap detection and control system (118) which includes a controller (120), including a memory (124) and a processor (122). The controller (120) is configured to receive from a sensor, such as a camera (128) a signal indicative of an image of crop material within a feederhouse (107) of the harvester (100). The controller (120) is also configured to analyze the image to measure a diameter of at least one ear of corn of the harvested crop material within the feederhouse (107). The controller (120) is further configured to determine an initial size of an auger gap (222) between an auger (208) and a trough (212) of a header (200) based on the diameter of the at least one ear of corn, the trough (212) being located beneath the auger (208). Preferably, the gap is adjusted by means of an actuator (132) based on the initial size.

## Description

### BACKGROUND

This section is intended to introduce the reader to various aspects of art that may be related to various aspects of the present disclosure, which are described below. This discussion is believed to be helpful in providing the reader with background information to facilitate a better understanding of the various aspects of the present disclosure. Accordingly, it should be understood that these statements are to be read in this light, and not as admissions of prior art.

A harvester may be used to harvest crops, such as barley, beans, beets, carrots, corn, cotton, flax, oats, potatoes, rye, soybeans, wheat, or other plant crops. The harvester may include or be coupled to a header, which may be designed to efficiently harvest certain types of crops. For example, a corn header may be designed to efficiently harvest corn. The corn header may include row units that each include components that operate to separate the ear of corn from the remainder of the corn plant as the harvester travels through a field. The remaining corn plant material is often left in the field to decompose and enhance the soil quality for future crop development.

Certain row units include feed rollers that engage a stalk and drive the stalk downwardly and rearwardly. As the stalk is driven downwardly, the ear engages deck plates positioned above the feed rollers, thereby separating the ear from the stalk. The ear moves rearwardly to the conveyors (e.g. augers), and the stalk is deposited on the field. Conveyors (e.g., augers) carry the ears of corn into the harvester (e.g., a chassis of the harvester), such as toward processing machinery of the harvester, for further processing.

Corn headers including a gathering auger are configured with a means to mechanically adjust a size of a gap between the auger and a trough of the corn header. The optimal auger gap is additionally dependent on changing crop conditions. Typically, the setting of the auger gap requires a skilled operator to identify the optimal auger gap and to mechanically adjust the header accordingly. As harvesting equipment makes the transition to greater degrees of autonomy, there arises the need for a control system that can identify and control this setting (e.g., auger gap setting). It is important to set the auger gap of the con header to be small enough to avoid damaging the ears of corn via wedging contact but large enough to not limit the throughput capacity of the corn header.

### SUMMARY

This summary is provided to introduce a selection of concepts that are further described below in the detailed description.

In certain embodiments, an agricultural harvester comprises a header, comprising an auger and a trough located beneath the auger, wherein the auger and trough are separated by an auger gap. The agricultural harvester further comprises an auger gap detection and control system, the auger gap detection and control system comprising a controller, including a memory and a processor. The controller is configured to receive a sensor signal indicative of an image of harvested crop material within a feederhouse of the agricultural harvester. The controller is also configured to analyze the image to measure a diameter of at least one ear of corn of the harvested crop material within the feederhouse. The controller is further configured to determine an initial size of an auger gap between an auger and a trough of a header of the agricultural harvester based on the diameter of the at least one ear of corn, the trough being located beneath the auger.

In certain embodiments, a method for detecting and controlling an auger gap of an agricultural harvester includes receiving, at a controller including a processor and a memory, a sensor signal indicative of an image of harvested crop material within a feederhouse of the agricultural harvester. The method also includes analyzing, via the controller, the image to measure a diameter of at least one ear of corn of the harvested crop material within the feederhouse. The method further includes determining, via the controller, an initial size of the auger gap between an auger and a trough of a header of the agricultural harvester based on the diameter of the at least one ear of corn, the trough being located beneath the auger.

In certain embodiments, an agricultural harvester includes a header including an auger and a trough located beneath the auger, wherein the auger and trough are separated by an auger gap.

The agricultural harvester also includes a controller including a memory and a processor. The controller is configured to receive a sensor signal indicative of an image of harvested crop material within a feederhouse of the agricultural harvester. The controller is also configured to analyze the image to measure a diameter of at least one ear of corn of the harvested crop material within the feederhouse and to detect a presence of at least one shelled ear of corn of the harvested crop material within the feederhouse. The controller is further configured to automatically adjust an initial size of the auger gap based on the diameter of the at least one ear of corn. The controller is even further configured to automatically adjust a size of the auger gap when the presence of the at least one shelled ear of corn is detected.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an agricultural harvester having a corn header, in accordance aspects of the present disclosure;
FIG. 2 is a perspective view of a header that may be employed the harvester of FIG. 1, in accordance with aspects of the present disclosure;
FIG. 3 is a perspective front view of a portion of the header of FIG. 2, in accordance with aspects of the present disclosure;
FIG. 4 is a flowchart of a method for detecting and controlling an auger gap of an agricultural harvester, in accordance with aspects of the present disclosure;
FIG. 5 is an example of an internal image of harvested crop material within a feederhouse with a metric of an ear of corn measured, in accordance with aspects of the present disclosure; and
FIG. 6 is an example of an internal image of harvested crop material within a feederhouse with a detected shelled ear of corn, in accordance with aspects of the present disclosure.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

The present disclosure relates generally to an agricultural harvester and, more specifically, to detecting and to controlling an auger gap using imaging processing.

The process of farming typically begins with planting seeds within a field. Over time, the seeds grow and eventually become harvestable crops. Typically, only a portion of each crop is commercially valuable, so each crop is harvested to separate the usable material from the remainder of the crop. For example, a harvester may include or be coupled to a header to harvest crops within the field. The header may be a corn header that is configured to efficiently harvest corn within the field. The corn header may include multiple row units arranged across a width of the corn header, and each row unit may include deck plates, stalk rollers, other component(s), or a combination thereof, that operate to separate ears of corn from stalks and materials other than grain (e.g., crop residue) as the harvester travels through the field. For example, corn headers are capable of chopping the stalks of corn quickly and collecting the corn ears while leaving behind the stalks, leaves, and any other unwanted and biodegradable byproduct. Conveyors (e.g., augers) carry the ears of corn into the harvester (e.g., a chassis of the harvester), such as toward processing machinery of the harvester, for further processing.

During harvesting, certain row units of the corn header include feed rollers that engage a stalk and drive the stalk downwardly and rearwardly. As the stalk is driven downwardly, the ear engages deck plates positioned above the feed rollers, thereby separating the ear from the stalk. The ear moves rearwardly to the conveyors (e.g., augers), and the stalk is deposited on the field. The position of an auger (e.g., gathering auger) relative to a trough of the corn header is important in harvesting the ears of corn. In particular, if a gap (e.g., vertical gap) between the auger and the trough is too large, then the throughput capacity of the corn header may be limited. If the gap is too small between the auger and the trough, then some of ears of corn may be damaged via wedging contact. The positions of the deck plates relative to each other is important in harvesting the ears of corn. Skilled operators have to actively adjust the gap between the auger and the trough to ensure that the optimal gap is being utilized as crop conditions change as the harvester traverses the field having the crop. This process may be demanding on the operator and subject to error.

Thus, it is presently recognized that a system to detect an optimal setting for the auger gap and/or to control an auger gap based on crop conditions may improve harvesting of the crop. Accordingly, the present embodiments relate to systems and methods for detecting and controlling (via a controller) an auger gap by receiving a sensor signal indicative of an image of harvested crop material within a feederhouse of the agricultural harvester (e.g., via at least one camera of an internal imaging system located within the feederhouse on a floor of the feederhouse), analyzing the image to measure a diameter of at least one ear of corn of the harvested crop material within the feederhouse, and determining an initial size of an auger gap between an auger and a trough of a header of the agricultural harvester based on the diameter of the at least one ear of corn, the trough being located beneath the auger. In certain embodiments, the systems and methods include causing a user-perceptible indication of the initial size of the auger gap to be provided to an operator (e.g., on a display) of the agricultural harvester for setting the auger gap. In certain embodiments, the systems and methods include automatically adjusting the auger gap to the initial size. In certain embodiments, the systems and the methods include analyzing the image to detect a presence of at least one shelled ear of corn of the harvested crop material within the feederhouse. In certain embodiments, the systems and the methods include causing a user-perceptible indication of the presence of the at least one shelled ear of corn to be provided to an operator (e.g., on a display) of the agricultural harvester when the presence of the at least one shelled ear of corn is detected. In certain embodiments, the systems and the methods include causing a recommendation to be provided to the operator on a display to adjust the auger gap when the presence of the at least one shelled ear of corn is detected. The recommendation may also include a suggested size to adjust the auger gap to. In certain embodiments, the systems and the methods include automatically adjusting a size of the auger gap when the presence of the at least one shelled ear of corn is detected.

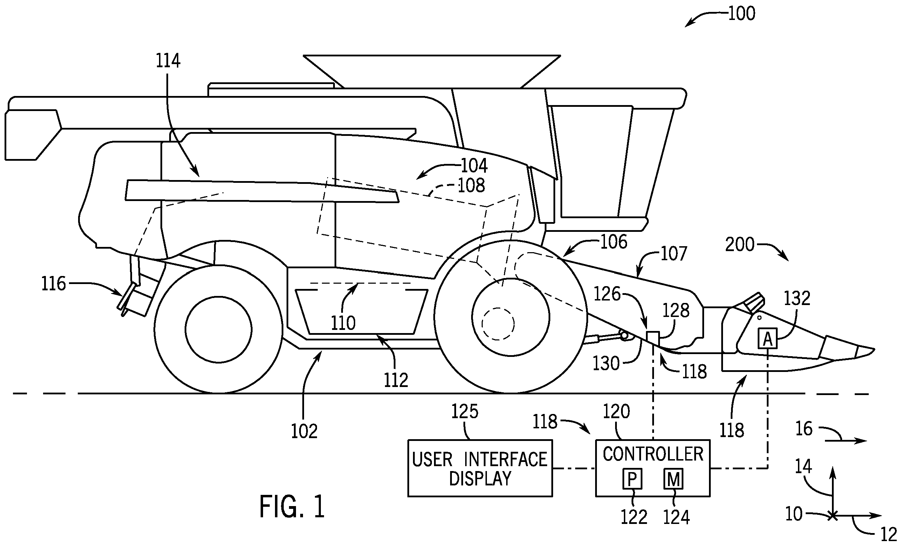

With the foregoing in mind, FIG. 1 is a side view of an embodiment of an agricultural harvester 100 having a corn header 200 (e.g., agricultural header). The agricultural harvester 100 includes a chassis 102 configured to support the corn header 200 and an agricultural crop processing system 104. As described in greater detail below, the corn header 200 is configured to separate ears of corn from stalks and to transport the ears of corn toward an inlet 106 (via a feederhouse 107) of the agricultural crop processing system 104 for further processing of the ears of corn. The agricultural crop processing system 104 receives the ears of corn from the header 200 (via the feederhouse 107) and separates desired crop material from crop residue. For example, the agricultural crop processing system 104 may include a thresher 108 having a cylindrical threshing rotor that transports the ears of corn in a helical flow path through the agricultural harvester 100. In addition to transporting the ears of corn, the thresher 108 may separate certain desired crop material (e.g., corn kernels) from the crop residue, such as husks and cobs, and enable the desired crop material to flow into a cleaning system 110 located beneath the thresher 108. The cleaning system 110 may remove debris from the desired crop material and transport the desired crop material to a storage compartment 112 within the agricultural harvester 100. The crop residue may be transported from the thresher 108 to a crop residue handling system 114, which may remove the crop residue from the agricultural harvester 100 via a crop residue spreading system 116 positioned at the aft end of the agricultural harvester 100.

As discussed in detail below, the header 200 includes multiple row units configured to separate ears of corn from stalks, thereby leaving bare stalks engaged with the soil. The ears of corn are directed toward the inlet 106. The bare stalks that remain engaged with the soil may be collectively referred to as stubble. To facilitate discussion, the agricultural harvester 100 and/or its components (e.g., the corn header 200) may be described with reference to a lateral axis or direction 10, a longitudinal axis or direction 12, and a vertical axis or direction 14. The agricultural harvester 100 and/or its components (e.g., the corn header 200) may also be described with reference to a direction of travel 16.

The agricultural harvester 100 includes an auger gap detection and control system 118. The auger gap detection and control system 118 includes a control system or controller 120 (e.g., an automation controller, an electronic controller, a programmable controller, a cloud computing system, control circuitry) with a processor 122 (e.g., processing circuitry) and memory 124. The processor 122 may be used to execute software code or instructions stored on the memory 124, such as to process signals and to control operations of the harvester 100. The term "code" or "software code" used herein refers to any instructions or set of instructions that control the operation of the auger gap detection and control system 118. The code or software code may exist in a computer-executable form, such as machine code, which is the set of instructions and data directly executed by the processor 122 of the controller 120, human-understandable form, such as source code, which may be compiled in order to be executed by the processor 122 of the controller 120, or an intermediate form, such as object code, which is produced by a compiler. In some embodiments, the auger gap detection and control system 118 may include a plurality of controllers.

As an example, the memory 124 may store processor-executable software code or instructions (e.g., firmware or software), which are tangibly stored on a non-transitory computer readable medium. Additionally or alternatively, the memory 124 may store data. As an example, the memory 124 may include a volatile memory, such as random access memory (RAM), and/or a nonvolatile memory, such as read-only memory (ROM), flash memory, a hard drive, or any other suitable optical, magnetic, or solid-state storage medium, or a combination thereof. Furthermore, the processor 122 may include multiple microprocessors, one or more "general-purpose" microprocessors, one or more special-purpose microprocessors, and/or one or more application specific integrated circuits (ASICS), or some combination thereof. For example, the processor 122 may include one or more reduced instruction set (RISC) or complex instruction set (CISC) processors. The processor 122 may include multiple processors, and/or the memory 124 may include multiple memory devices. The processor 122 and/or the memory 124 may be located in any suitable portion of the harvester 100 (e.g., a cab of the harvester 100). Further, the controller 120 may be a distributed controller with the multiple processors 122 and/or the multiple memories 124 in separate housings or locations (e.g., in the header 200, in a remote location, in the cloud). The controller 120 may be communicatively coupled to a user interface or display 125. In certain embodiments, the user interface or display 125 may be located in a cab of the harvester 100.

The auger gap detection and control system 118 includes an internal imaging system 126 communicatively coupled to the controller 120. The internal imaging system 126 includes one or more cameras 128 located on a floor 130 of the feederhouse 107. The one or more cameras 128 acquire images of the harvested crop material within the feederhouse 107 (prior to threshing) and communicate signals representative of the acquired images to the controller 120. These images within the feederhouse 107 may be acquired as the agricultural harvester 100 travels through a field of crops.

The controller 120 is configured to receive the signals representative of acquired images from the internal imaging system 126. The controller 120 is also configured to analyze the image by identifying a particular component of the harvested crop material (e.g., ear of corn) and measuring at least one metric (e.g., diameter of the ear of corn) of the harvested crop material within the feederhouse 107. In certain embodiments, the controller 120 is further configured to analyze the image by detecting a presence of at least one shelled ear of corn within the feederhouse 107. In certain embodiments, the controller 120 is configured to utilize computer vision in analyzing the images and measuring the metrics within the images.

The controller 120 is further configured to determine an initial size of an auger gap (e.g., vertical auger) between an auger and a trough of the header 200 of the agricultural harvester 100 based on the diameter of the at least one ear of corn, the trough being located beneath the auger. In certain embodiments, the controller 120 is even further configured to cause a user-perceptible indication of the initial size of the auger gap to be provided to an operator (e.g., on user interface or display 125) of the agricultural harvester 100 for setting the auger gap. In certain embodiments, the controller 120 is yet further configured to automatically adjust the auger gap to the initial size. In certain embodiments, the controller 120 is configured to cause a user-perceptible indication of the presence of the at least one shelled ear of corn to be provided to an operator (e.g., user interface or display 125) of the agricultural harvester 100 when the presence of the at least one shelled ear of corn is detected. In certain embodiments, the controller 120 is also configured to cause a recommendation to be provided to the operator (e.g., user interface or display 125) to adjust the auger gap when the presence of the at least one shelled ear of corn is detected. The recommendation may also include a suggested size to adjust the auger gap to. In certain embodiments, the controller 120 is further configured to automatically adjust a size of the auger gap when the presence of the at least one shelled ear of corn is detected. The controller 120 is configured to receive and analyze the images and provide user-perceptible indications (e.g., of an initial size of the auger gap or presence of shelled ear of corn) or to automatically adjust the auger gap as the harvester 100 travels through a field of crops so that the auger gap can be changed to account for variability in crop conditions.

The auger gap detection and control system 118 includes actuators 132 coupled to one or more augers and configured to alter a position (e.g., raise or lower relative to a trough) of the one or more augers, thus, altering the auger gap between the one or more augers and the trough of the header 200. The controller 120 is communicatively coupled to the actuators 132 to control the positions of the one or more augers via control signals provided to the actuators 132.

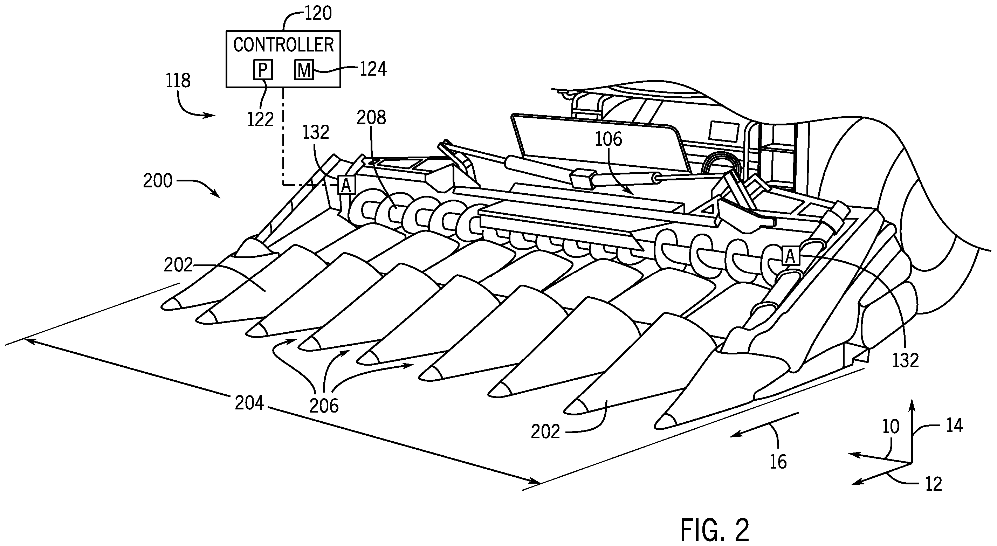

FIG. 2 is a perspective view of an embodiment of the header 200 that may be employed within the agricultural harvester 100 of FIG. 1. In the illustrated embodiment, the header 200 is a corn header and includes multiple dividers 202 configured to separate rows of a crop (e.g., corn). The dividers 202 may be distributed across a width 204 of the header 200 (e.g., along the lateral axis 10). As the header 200 moves along a path, the dividers 202 may direct the crops from each row to row units 206. The row units 206 are configured to receive each crop (e.g., a stalk). A portion of the crops are directed to one of a pair of conveyors 208 (e.g., augers) configured to convey the portion of crops laterally inward to a center crop conveyor at a center of the header 200, and the center crop conveyor directs the portion of crops toward the inlet 106 of the agricultural crop processing system. As illustrated, the conveyors 208 extend along a substantial portion of the width 204 of the header 200 (e.g., along the lateral axis 10). The conveyors 208 may be driven by a drive mechanism (e.g., electric motor, hydraulic motor).

The header 200 may separate the desirable crop material and crop residue from one another to facilitate directing the desirable crop material into the agricultural crop processing system via the inlet 106 and to block entry of the crop residue into the agricultural crop processing system via the inlet 106. For example, operation of the row units 206 may direct the desirable crop material to the conveyors 208 and discharge the crop residue away from the conveyors 208, such as discharging the crop residue directly onto the field. The controller 120 of the auger gap detection and control system 118 may provide control signals to actuators 132 to adjust the positioning of the conveyors 208 as the harvester 100 cuts the crops, separates the crop residue from the desirable crop material, and discharges the crop residue (e.g., onto the field). Each conveyor 208 may be coupled to at least one actuator 132.

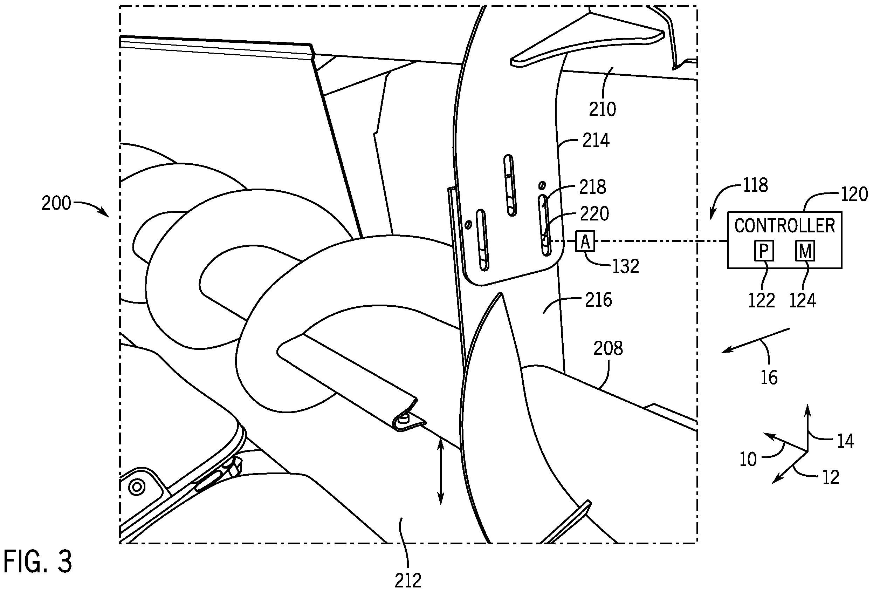

FIG. 3 is a perspective front view of a portion of the header 200 of FIG. 2. As shown, the portion of the header 200 includes a frame 210 coupled to the conveyor 208 (e.g., auger) and to trough 212. The trough 212 is located beneath the conveyor 208 in the vertical direction 14. The frame 210 includes a first hanger or plate 214 extending generally in the vertical direction 14 toward the trough 212. The conveyor 208 is coupled to a second hanger or plate 216 extending generally in the vertical direction 14 away from the trough 212. The first hanger or plate 214 includes a first set of openings 218. The second hangar or plate 216 includes a second set of openings 220 that are aligned with the first set of openings 218 in the lateral direction 10. The conveyor 208 is configured to be coupled to the frame 210 via fasters (not shown) extending through the openings 218, 220 of the hangers 214, 216. The actuator 132 is coupled to the first hanger 214 and/or the second hanger 216 and is configured (in response to control signals from the controller 120 of the auger gap detection and control system 118) to lower or raise the conveyor 208 relative to the trough 212 (and move the second hanger 216 relative to the first hanger 214), thus, adjusting an auger gap 222 (e.g., vertical gap) between the conveyor 208 and the trough 212 in the vertical direction 14.

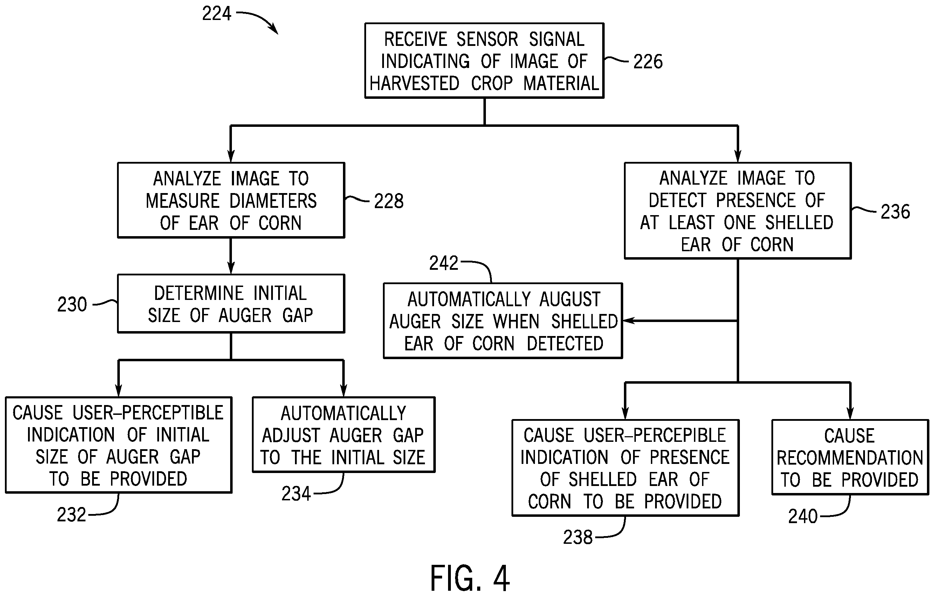

FIG. 4 is a flowchart of a method 224 for detecting and controlling an auger gap of the agricultural harvester 100 in FIG. 1. One or more steps of the method 224 may be may be performed by the controller 120 in FIG. 1. The steps of the method 224 may be repeated as the agricultural harvester 100 traverses a field of a crop (where crop conditions may vary). One or more steps of the method 224 may be performed simultaneously or in a different order from that depicted in FIG. 4.

The method 224 includes receiving a sensor signal indicative of an image of harvested crop material (prior to threshing) within a feederhouse of the agricultural harvester (block 226). The image is an internal image from within the feederhouse provided by one or more cameras (of an internal imaging system) located on a floor of the feederhouse.

The method 224 also includes analyzing the image by identifying a particular component of the harvested crop material (e.g., ear of corn) and measuring at least one metric of the harvested crop material (e.g., diameter of the ear of corn) within the feederhouse (block 228). In certain embodiments, the controller may utilize computer vision in analyzing the images and measuring the metrics within the images. The method 224 further includes determining an initial size of an auger gap (e.g., vertical gap between the auger and the trough of the header) based on the diameter of the at least one ear of corn (block 230).

In certain embodiments, the method 224 includes causing a user-perceptible indication of the initial size of the auger gap to be provided to an operator (e.g., on the user interface or display 125 in FIG. 1) of the agricultural harvester for setting the auger gap (block 232). In certain embodiments, the method 224 includes automatically adjusting the auger gap to the initial size (e.g., via control signals provided to actuators) (block 234).

The method 224 includes analyzing the image to detect a presence of at least one shelled ear of corn of the harvested crop material within the feederhouse (block 236). In certain embodiments, the controller may utilize computer vision in analyzing the images. In certain embodiments, the method 224 includes causing a user-perceptible indication of the presence of the at least one shelled ear of corn to be provided to an operator (e.g., on the user interface or display 125 in FIG. 1) of the agricultural harvester when the presence of the at least one shelled ear of corn is detected (block 238). In certain embodiments, the method 224 includes causing a recommendation to be provided to the operator on a display to adjust the auger gap when the presence of the at least one shelled ear of corn is detected (block 240). In certain embodiments, the recommendation includes a suggested size to adjust the auger gap to. In certain embodiments, the method 224 includes automatically adjusting a size of the auger gap when the presence of the at least one shelled ear of corn is detected (e.g., via control signals provided to actuators) (block 242).

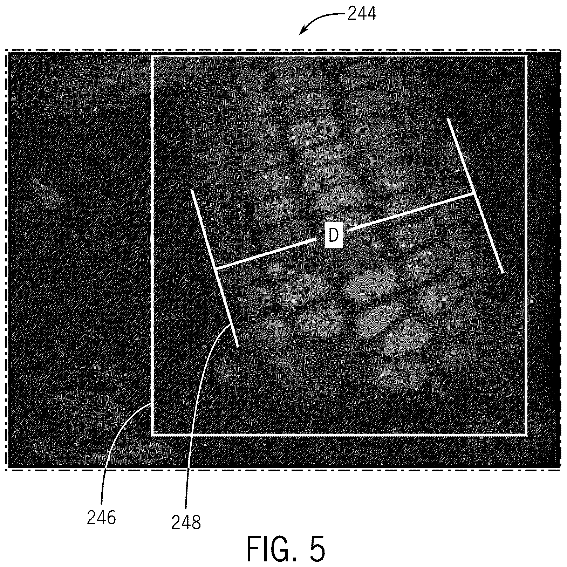

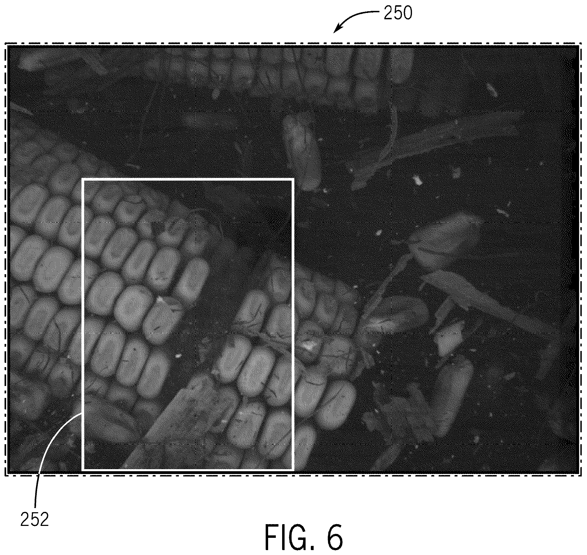

FIG. 5 is an example of an internal image 244 of harvested crop material within a feederhouse with a metric of an ear of corn measured. As depicted in the internal image 244, the identification of an ear of corn is indicated by box 246. Also, as depicted in the internal image 244, a diameter 248 is measured of the ear of corn. FIG. 6 is an example of an internal image 250 of harvested crop material within a feederhouse with a detected shelled ear of corn. As depicted in the internal image 250, detection of a shelled ear of corn is indicated by box 252.

By incorporating the systems and methods disclosed herein with agricultural harvesters, the process of harvesting crop material (e.g., corn) is more efficient. For example, detecting and controlling an auger gap using image processing enables the optimal auger gap to be utilized as crop conditions change throughout a field.

While only certain features have been illustrated and described herein, many modifications and changes will occur to those skilled in the art. It is, therefore, to be understood that the appended claims are intended to cover all such modifications.

## Claims

1. An agricultural harvester (100) comprising :
a header (200), comprising an auger (208) and a trough (212) located beneath the auger, wherein the auger and trough are separated by an auger gap (222) and
an auger gap detection and control system (118),
**characterized in that** the auger gap detection and control system comprises a controller (120) with a memory (124) and a processor (122), wherein the controller (110) is configured to:
receive a sensor signal indicative of an image of harvested crop material within a feederhouse (107) of the agricultural harvester (100);
analyze the image to measure a diameter of at least one ear of corn of the harvested crop material within the feederhouse (107); and
determine an initial size of an auger gap (222) between an auger (208) and a trough (212) of a header (200) of the agricultural harvester (100) based on the diameter of the at least one ear of corn, the trough (212) being located beneath the auger (208).

2. The agricultural harvester according to claim 1, wherein the controller (120) is further configured to cause a user-perceptible indication of the initial size of the auger gap (222) to be provided to an operator of the agricultural harvester (100) for setting the auger gap.

3. The agricultural harvester according to any of the claims 1 to 2, wherein the controller (120) is further configured to automatically adjust the auger gap (222) to the initial size.

4. The agricultural harvester according to any of the claims 1 to 3, wherein the controller (120) is further configured to analyze the image to detect a presence of at least one shelled ear of corn of the harvested crop material within the feederhouse (107).

5. The agricultural harvester according to claim 4, wherein the controller (120) is further configured to cause a user-perceptible indication of the presence of the at least one shelled ear of corn to be provided to an operator of the agricultural harvester (100) when the presence of the at least one shelled ear of corn is detected.

6. The agricultural harvester (100) according to claim 5, wherein the controller (120) is further configured to cause a recommendation to be provided to the operator on a display (125) to adjust the auger gap (222) when the presence of the at least one shelled ear of corn is detected.

7. The agricultural harvester (100) according to claim 6, wherein the recommendation comprises a suggested size to adjust the auger gap (222) to.

8. The agricultural harvester (100) according to any of the claims 4 to 7, wherein the controller (120) is further configured to automatically adjust a size of the auger gap (222) when the presence of the at least one shelled ear of corn is detected.

9. The agricultural harvester (100) according to any of the claims 1 to 8, further comprising an internal imaging system (126) comprising at least one camera (128) located within the feederhouse (107) on a floor (130) of the feederhouse (107), wherein the internal imaging system (126) is communicatively coupled to the controller (120) to provide the sensor signal indicative of the image.

10. The agricultural harvester (100) according to any of the claims 1 to 9, wherein the controller (120) is configured as the agricultural harvester (100) travels through a crop field to continuously:
receive sensor signals indicative of images of the harvested crop material within the feederhouse (107);
analyze the images to detect a presence of at least one shelled ear of corn within the feederhouse (107); and
automatically adjust a size of the auger gap (222) when the presence of the at least one shelled ear of corn is detected.

11. A method for detecting and controlling an auger gap (222) of an agricultural harvester (100), **characterized in that** the method comprises:
receiving, at a controller (120) comprising a processor (122) and a memory (124), a sensor signal indicative of an image of harvested crop material within a feederhouse (107) of the agricultural harvester (100);
analyzing, via the controller (120), the image to measure a diameter of at least one ear of corn of the harvested crop material within the feederhouse; (107) and
determining, via the controller, an initial size of the auger gap (222) between an auger (208) and a trough (212) of a header (200) of the agricultural harvester (100) based on the diameter of the at least one ear of corn, the trough (212) being located beneath the auger (208).

12. The method of claim 11, wherein receiving the sensor signal indicative of the image of harvested crop material comprises receiving the sensor signal from an internal imaging system (126) comprising at least one camera (128) located within the feederhouse (107) on a floor (130) of the feederhouse (107).

13. The method of claim 11 and/or 12, further comprising causing, via the controller (120), a user-perceptible indication of the initial size of the auger gap (222) to be provided to an operator of the agricultural harvester (100) for setting the auger gap (222).

14. The method of any of claims 11 to 13, further comprising automatically adjusting, via the controller (120), the auger gap (222) to the initial size.

15. The method of any of claim 11 to 14, further comprising analyzing, via the controller (120), the image to detect a presence of at least one shelled ear of corn of the harvested crop material within the feederhouse (107).
